# EUROPEAN PATENT APPLICATION

(11) **EP 2 541 373 A1**
(43) Date of publication of application: **02.01.2013**
(21) Application number: 11172345.8
(22) Date of filing: 01.07.2011
(51) Int. Cl.: G06F 3/023

(54) **System and method for seamless switching among different text entry systems on an ambiguous keyboard**

(71) Applicant: Research In Motion Limited, Waterloo, ON N2L 3W8 (CA)
(72) Inventor: Griffin, Jason, Tyler, Waterloo, Ontario N2L 3W8 (CA)
(74) Representative: MERH-IP Matias Erny Reichl Hoffmann

(57) **Abstract**

An electronic text-generating device for generation of a text is disclosed. The device comprises an input member for which a set of selections in a first text entry mode corresponds to a first set of characters and the set of selections in a second text entry mode corresponds to a second set of characters, the first text entry mode and the second text entry mode being two different modes of entering text. The device further comprises a processor for generating the text in a mixed text entry mode, wherein the processor generates one of the first set of characters in response to detecting the set of selections of the input member in the first text entry mode and generates one of the second set of characters in response to detecting the set of selections of the input member in the second text entry mode.

## Description

### FIELD OF TECHNOLOGY

The present disclosure relates to electronic devices, including but not limited to handheld electronic devices and, more specifically, to electronic devices capable of generating text.

### Background

Electronic devices, including handheld electronic devices, have gained widespread use and may provide a variety of functions including, for example, telephonic, electronic messaging, and other personal information manager (PIM) application functions. Handheld electronic devices include, for example, several types of mobile stations such as simple cellular telephones, smart telephones, wireless personal digital assistants (PDAs), remote control devices used, for example, for TVs, and laptop computers with wireless 802.11 or Bluetooth@ capabilities.

Handheld electronic devices such as PDAs or smart telephones are generally intended for handheld use and ease of portability. Smaller devices are generally desirable for portability. A touch-sensitive display, also known as a touchscreen display, may also be useful on handheld electronic devices, which are small and have limited space for user input and output. Advantageously, the information displayed on the touch-sensitive displays may be modified depending on the functions and operations being performed. With continued demand for decreased size of handheld electronic devices, and also widespread use of these devices for entering text, the devices benefit from improvements in the technologies for users to enter text comfortably and quickly.

### Brief Description of the Drawings

It is to be understood that following detailed description is exemplary and explanatory only and is not restrictive of the invention, as claimed. The accompanying drawings, which are incorporated in and constitute a part of this specification, illustrate several embodiments of the invention and together with the description, serve to explain the principles of the invention. In the drawings:

Figs. **1A-1F** show front views of example handheld electronic devices operating in various single text entry modes according the present disclosure;

Figs. **2A-2H** show front views of example handheld electronic devices operating in various mixed text entry modes according to the present disclosure;

Figs. **3A** and **3B** show front views of example handheld electronic devices used for entering arbitrary words according to the present disclosure;

Fig. **4** illustrates a selection association method performed by an example handheld electronic device according to the present disclosure;

Fig. **5** illustrates a text generation method performed by a handheld electronic device according to the present disclosure; and

Fig. **6** shows a block diagram of an example of a handheld electronic device according to the present disclosure.

### Detailed Description

For simplicity and clarity of illustration, reference numerals may be repeated among the figures to indicate corresponding or analogous elements. Also, similarly named elements perform similar functions and are similarly designed, unless specified otherwise. Numerous details are set forth to provide an understanding of the embodiments described herein. The embodiments may be practiced without these details. In other instances, well-known methods, procedures, and components have not been described in detail to avoid obscuring the example embodiments described herein. The description is not to be considered as limited to the scope of the example embodiments described herein.

The present disclosure generally relates to an electronic device, also variably referred to here as "device", which is a handheld electronic device in the example embodiments described herein. Examples of handheld electronic devices include mobile, or handheld, wireless communication devices such as pagers, cellular phones, cellular smart-phones, tablet computers, wireless organizers, personal digital assistants, wirelessly enabled notebook computers, handheld electronic game devices, digital photograph albums, digital cameras, and remote control devices used, for example, for television, audio systems, home theater systems, and so forth.

Users use handheld electronic devices in an increasing variety of ways and run a variety of applications on those devices. For example, a user may use a handheld electronic device to exchange text messages such as emails, watch videos, read the text of a journal or a book, or draft a document. As a result, a handheld electronic device often requires both a display for displaying text and images, and a keyboard or a keypad for entering text and other characters.

Such handheld electronic devices are generally intended to be portable, and thus are of a relatively compact configuration. In these devices, keys and other input structures often perform multiple aspects or features under certain circumstances and in some embodiments have multiple characters or functions associated therewith.

With advances in technology, handheld electronic devices are built to have progressively smaller form factors and yet have progressively greater numbers of applications and features resident thereon. As the form factor decreases, difficulties arise in allocating sufficient space for both the display and the keypad. As a matter of usability, the display cannot be too small, because an average user cannot easily read a long text or watch a video on a very small display. In fact, the average handheld electronic device has shrunk to a size that for its display to be usable, the display needs to occupy almost all of the front space of the device. This does not leave much space for the keypad. To compensate for the reduced available space, the size of the keypad has also shrunk. A keypad, however, must be capable of entering text, for example, all twenty-six letters of the English alphabet, as well as appropriate punctuation and other symbols. Therefore, a small keypad includes a large number of tightly packed keys.

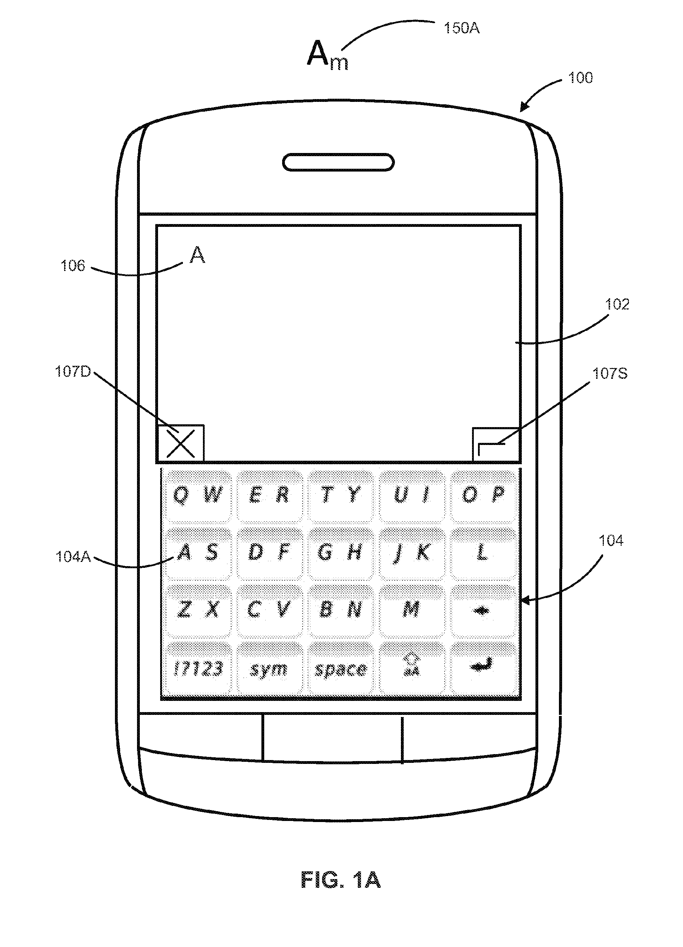

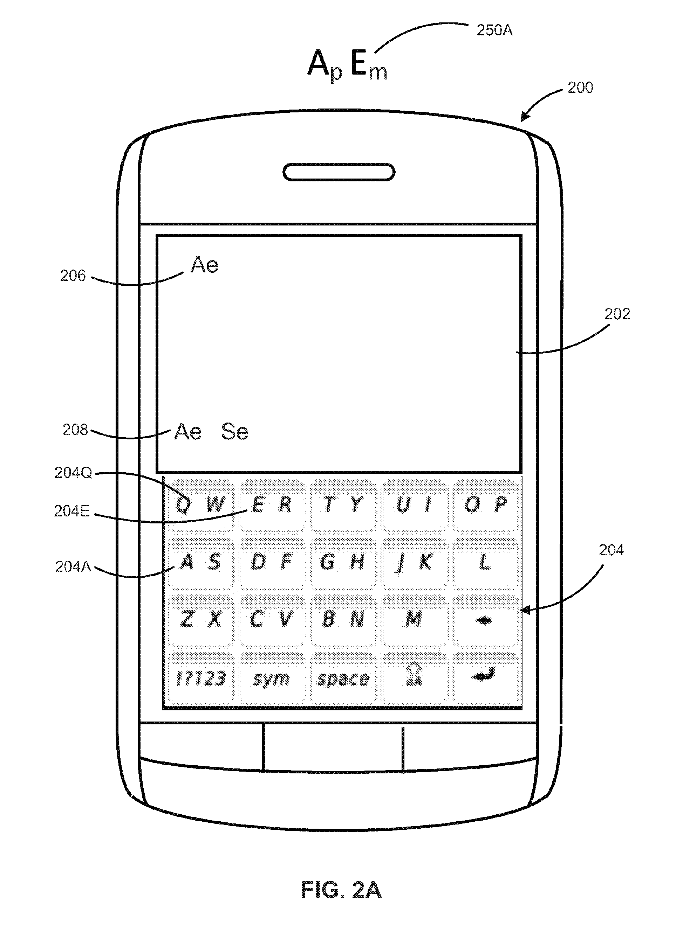

To reduce the difficulties that arise in using tightly packed small keys, some reduced keyboards have reduced the number of the keys. These reduced keyboards have less keys compared to a common computer keyboard. To cover all alphabet characters with less keys, many of the keys are "overloaded", that is, the same key is used for entering multiple characters. For example, in the SureType® keyboard, all 26 letters of the English language are associated with 14 letter keys. One example of a SureType keyboard, a reduced QWERTY keyboard, is shown as a set of input members **104** in the embodiments of Figs. **1A-1F** and the set of input members **204** in the embodiments of Figs. **2A-2H**, further described below. In general, as used in this disclosure, a set can include one or more members. Thus, a set of input members can include one or more input members. Similarly, a set of selections, or a selection set as defined below, each can include one or more selections.

In the example reduced QWERTY keyboards **104** and **204,** the location of the key for each letter corresponds to the location of the keys in a traditional QWERTY keyboard. However, unlike in the traditional QWERTY keyboard wherein each letter is associated with an individual key, in the reduced QWERTY keyboards **104** and **204**, some keys have two letters associated thereto.

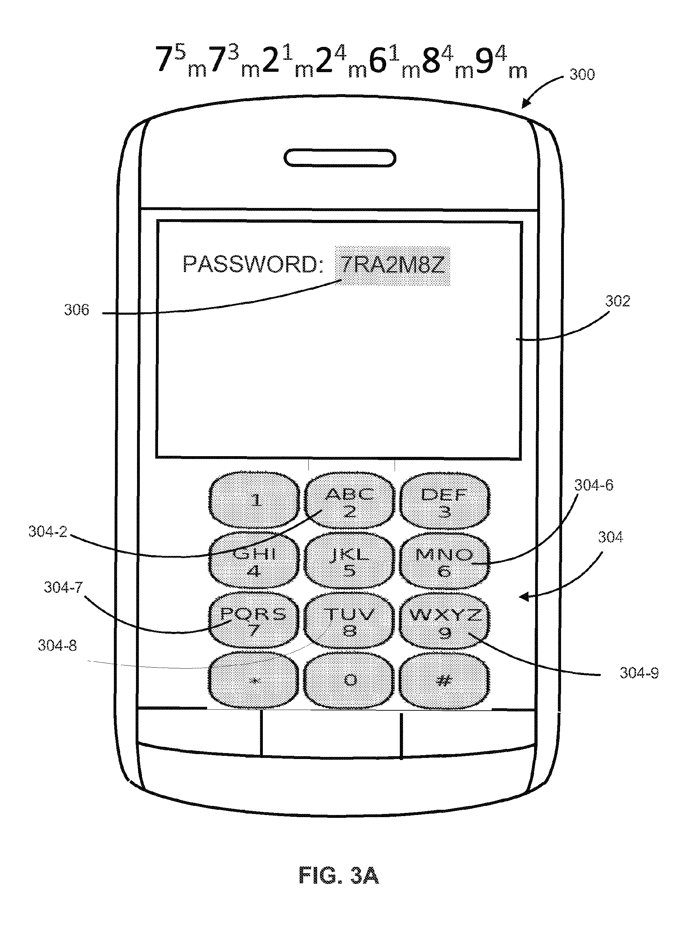

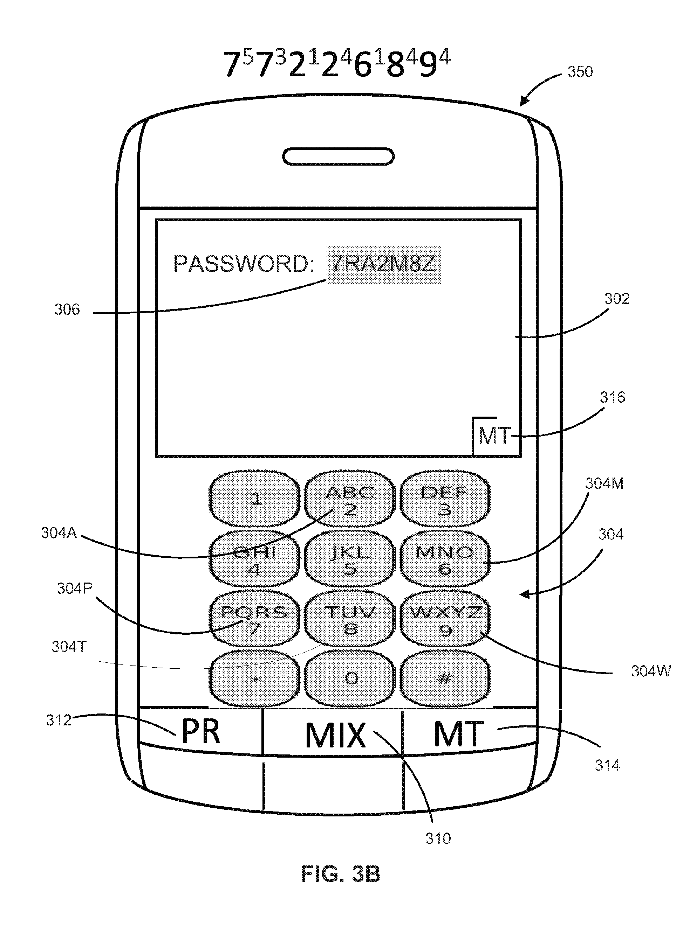

Similarly, in some reduced keypads such as the standard ITU E.161 keypad, all 26 English letters are associated with the number keys 2-9. One example of such reduced keypad is shown as a set of input members **304** in the embodiments of Figs. **3A** and **3B**, further described below. In the example keypad 304, for instance, at least three letters as associated with each of the keys 2-9. For example, in addition to the number "2", three letters A, B, and C are also associated with the "2" key and, in addition to the number "7", four letters P, Q, R, and S, are also associated with to the "7" key.

In a traditional keyboard, a user can input a character by selecting, for example, actuating, clicking, pressing, or tapping, a key associated with the character. In a reduced keyboard, on the other hand, when a user selects an overloaded key, the user may intend to enter any one of the multiple characters associated with that key. It is therefore ambiguous as to which character among the multiple characters the user intended to input. Accordingly, a device having a reduced keyboard requires an input system to disambiguate the user input in order to determine the character intended to be input by the user.

One of the input systems used in some devices with keypads or reduced keyboards is the multi-tap input system, also known as multi-tap system, multi-tap text entry mode, or multi-tap mode for short. In the multi-tap system, a user cycles through characters associated with an overloaded key by repeatedly selecting that key. For example, in keypad **304**, in some example embodiments, when a user is entering text in a multi-tap text entry mode and the user selects the overloaded 2 key once, twice, thrice, four, or five times, the device cycles through displaying the letters associated with the 2 key followed by the number 2, that is, chooses and displays A, B, C, 2, and A respectively. Once the user pauses after selecting a key multiple times, the device determines that the entry of one character has finished and accordingly determines the character. Thus, if a user pauses after selecting the 2 key twice, for example, the device decides that the user has entered the letter B, and moves on to accepting entry of the next letter. Further, in the above example, selecting the 2 key twice followed by a pause and then by selecting the 2 key one more time generates two letters BA (corresponding to selecting the 2 key twice and once, respectively). On the other hand, selecting the 2 key three consecutive times with no pauses generates one letter C.

Fig. **1A** shows a front view of a handheld electronic device **100** operating in the multi-tap text entry mode, in accordance with an exemplary embodiment. Device **100** includes a display **102** and a set of input members **104**. Display **102** includes an entry section 106 that displays the text entered by a user.

In some example embodiments, display **102** is a touch-sensitive display. A touch sensitive display can also be used by device **100** to accept entries from a user. In some example embodiments, all or parts of display **102** is a touch-sensitive display. The touch-sensitive sections can be used for additional functions different from entering text, for example, for selecting or scrolling text. In some embodiments the user uses her fingers to touch display **102** in order to perform some additional functions. In some embodiments, for example, the user performs a select touch by tapping on the word with a finger to select a word displayed on display **102**. Further, the user performs a scroll touch by sweeping the screen with a finger in the direction of the scroll. In some embodiments, a touch-sensitive section of display **102** also recognizes other touch contacts with one or more fingers to perform other functions, for example, to delete a word, or to enter a space. In some other embodiments, specific touch-sensitive sections of display **102** are dedicated to performing those other functions. In some embodiments, for example, a delete section **107D** of display **102** is touched to delete a highlighted text. In some embodiments, delete section **107D** displays an appropriate sign that indicates the deletion function. Similarly, in some embodiments a space section **107S** of display 102 is touched to add a space at the location of a cursor in the text, or after the last entered words.

The set of members **104** in device **100** is in the form of a reduced QWERTY keyboard. The set of input members **104**, for example, includes fourteen character input members organized in three rows consisting of five, five, and four input members respectively. Of the input members **104**, for example, letters A and S are associated with input member **104A**. In various embodiments input members **104** are physical switches, accelerometers, capacitive, non-tactile keys, or capacitive keys with haptic response. In some embodiments, input members **104** are virtual keys, for example, keys located on a touch sensitive screen. A user selects an input member by, for example, actuating, clicking, pressing, touching, or tapping the input member. Input members **104** are also variably referred to as keys.

A set of selections of one or more input members in a text entry mode is called a selection set. Each of Figs. **1A-1F****, 2A-2E,** **2G****, 2H****, 3A,** and **3B** has been given a label at the top that indicates, as a shorthand, the selection set corresponding to the figure. For example, in the embodiment shown in Fig. 1A, a user has selected input member **104A** once in the multi-tap mode. Label **150A** thus reads "**Aₘ**", in which the letter "A" indicates a selection of input member **104A** and the suffix "m" indicates the multi-tap mode. As a result of the selection **Aₘ**, device **100** displays at entry section **106** the entry "A".

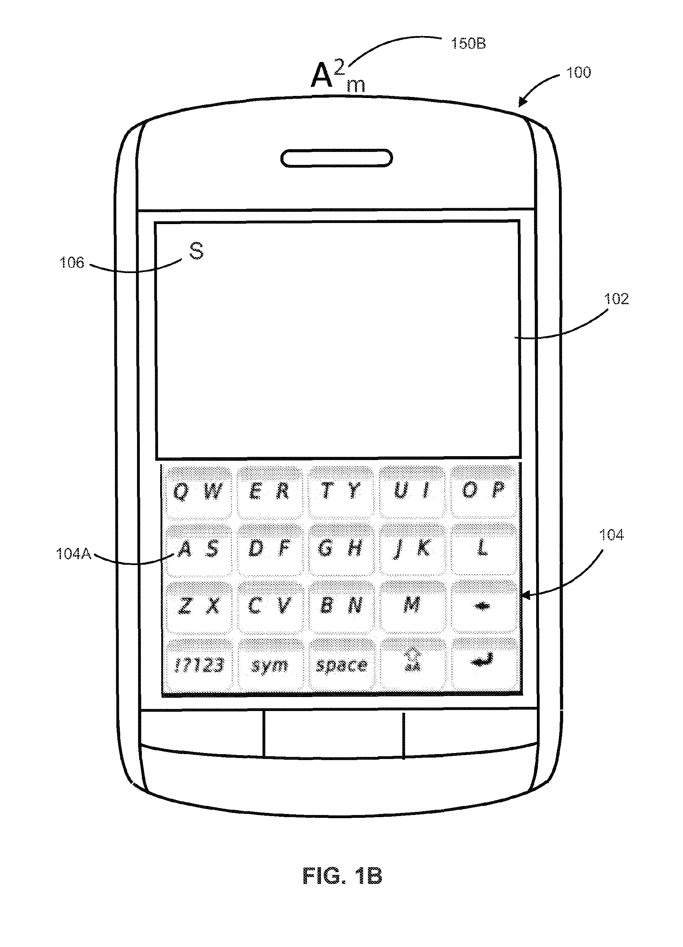

Fig. **1B**, on the other hand, shows device **100** after entry of a selection set "**A²ₘ**", as indicated by label **150B**, according to some embodiments. Selection set **A²ₘ** represents two consecutive selections of input member **104A** in the multi-tap mode with no pauses between the two selections. As shown in Fig. **1B**, as a result of the selection set **A²ₘ** , device **100** displays at entry section **106** the entry "S", which is the second character associated with input member **104A.**

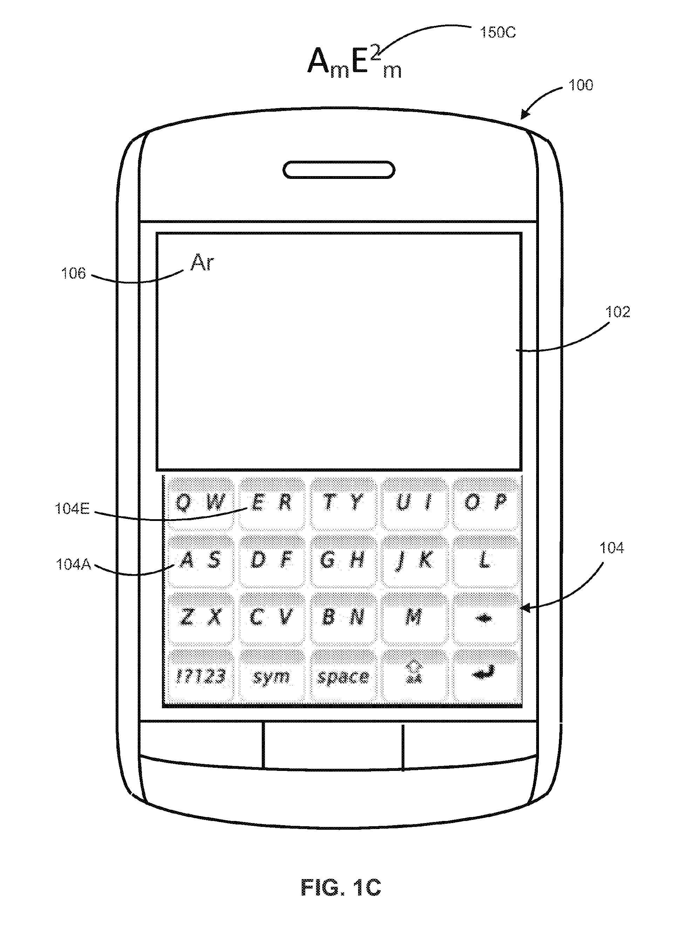

As another example of the operation of device **100** in the multi-tap mode, Fig. **1C** shows device **100** after entry of a selection set "**AₘE²ₘ**", as indicated by label **150C**, according to some embodiments. Selection set **AₘE²ₘ** represents one selection of input member **104A** in the multi-tap mode followed by two consecutive selections of an input member **104E** in the multi-tap mode. Letter E and R are associated with input member **104E**. As shown in Fig. **1C**, as a result of the selection set **AₘE²ₘ,** device **100** di**s**plays at entry section **106** the entry "Ar" in which the letter "A" results from the selection **Aₘ** and the letter "e" results from the selection **E²ₘ**.

Another text entry system for reduced keyboards, in accordance with some embodiments, is the predictive text entry system, also called the ambiguous text entry system, the predictive system, the predictive mode, the ambiguous system, or the ambiguous mode. In the predictive system, when a user selects an overloaded key, the device predicts the user's intended entry by considering each of the multiple characters associated with the overloaded key and finding those characters that can be part of an allowed combination such as an acceptable n-gram or an acceptable word. An acceptable n-gram is a sequence of n characters that can start an acceptable word that has n or more letters. For example, in the above described reduced mobile phone keypad shown in Fig. 3, when a user is entering text in a predictive text entry mode and the user starts by selecting the overloaded 2 key (input member 304-2) once, the device assumes that the user might intend entry of either of the letters A, B, or C, as well as the number 2, associated with the 2 key. If the user then presses the 7 key (input member 304-7), which is associated with the letters P, Q, R, and S and the number 7, the device considers all possible twelve combinations of 2, A, B, or C, with 7, P, Q, R, and S, and finds the combinations that are acceptable, that is, combinations that can be the starting two characters of an acceptable word with two or more letters. Thus, in some embodiments, the device chooses and presents to the user the 2-grams AP, AQ, AR, AS, BR, and CR, each of which can be the first two letters of a word (and some are like AS, which is a full two letter word). The device, on the other hand, rejects and does not present the other possible two letter combinations BP, BQ, BS, CP, CQ, or CS, if the device does not find any word which starts with each of these 2-grams. Similarly, if the user starts by selecting the 2 key twice, the device generates and presents to the user acceptable two letter combinations of the letters A, B, and C, with the same letters A, B, and C, which comprise of, for example, AA, AB, AC, BA, BB, and CA. The acceptable combinations are also called candidate entries. The process of finding acceptable combinations is also called "disambiguation".

In the predictive mode, in accordance with some embodiments, upon receiving n-selections, the device presents the one or more acceptable combinations as candidate n-letter entries, also known as n-grams, and allows the user to "lock" one of the candidate n-grams by selecting that combination. In some embodiments, the device presents the candidates to the user by displaying the candidates on a display. In some embodiments, the user can select a candidate by first moving a curser to the desired candidate and then selecting a selection button. In some other embodiments, the display is a touch sensitive display and the user can select the desired candidate by tapping over that candidate on the screen.

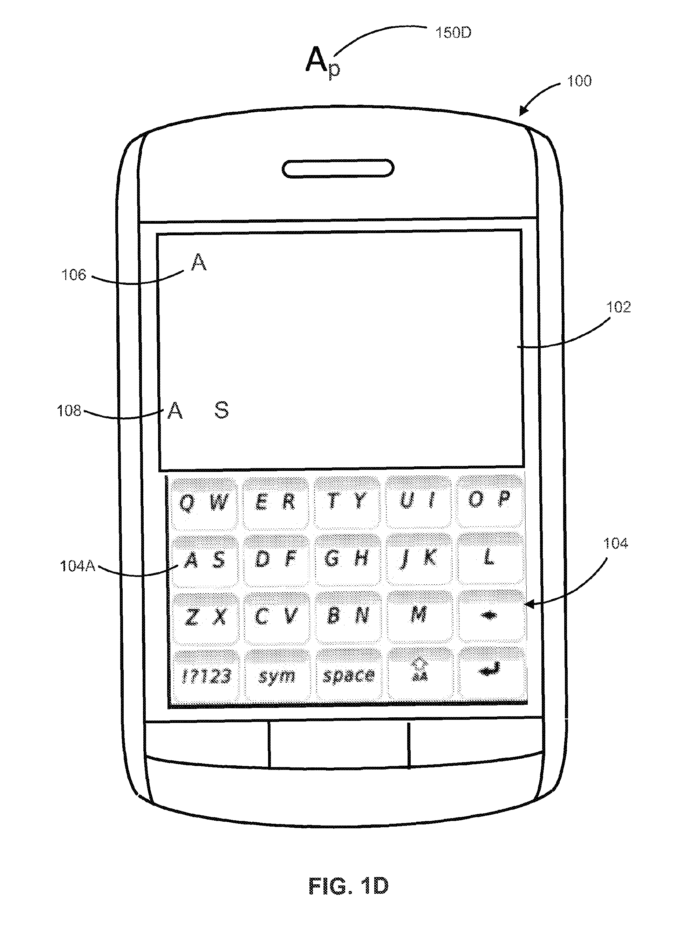

Fig. **1D** shows an example of the operation of device **100** in the predictive mode, according to some embodiments. In particular, Fig. **1D** shows device **100** after entry of a selection set **"Aₚ**", as indicated by label **150D**. Selection set **Ap** represents one selection of input member **104A**, indicated by the letter "A" in label **150D**, the selection detected by device **100** in the predictive mode, as indicated by the subscript "p" in label **150D.** As shown in Fig. **1D**, display **102** also includes a candidate section **108** which displays the candidate entries resulting from the selection set. As shown in Fig. **1D**, as a result of the selection set **Ap**, device **100** generates and displays in candidate section **108** two one letter candidates A, and S. Moreover, in entry section **106**, device **100** shows one of the candidates, here A, as the default candidate.

Thus, in the multi-tap system when the user selects the same key for multiple times in a row with no pause, the device circles through the characters associated with the key and creates a single letter entry. In the predictive system, on the other hand, when the user selects the same key for multiple times in a row, for example, N times in a row, the device usually creates one or more N-grams, each comprising an acceptable N-letter combination of the multiple characters associated with the selected key.

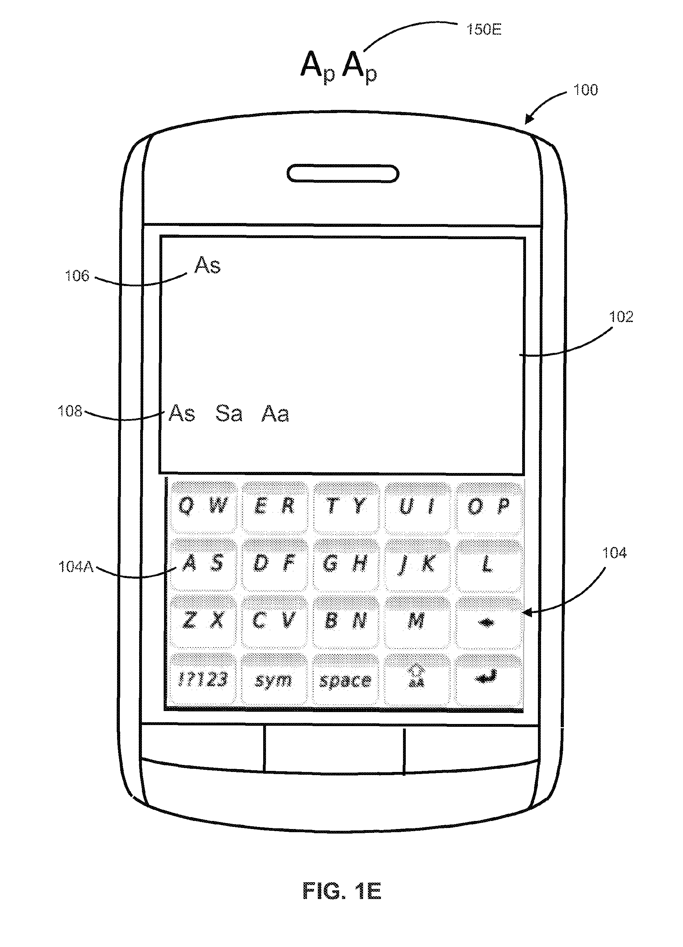

Fig. **1E** shows device **100** after entry of a selection set **"AₚAₚ**", as indicated by label **150E**, according to some embodiments. Selection set **ApAp** represents two consecutive selections of input member **104A** in the predictive mode. As shown in Fig. **1E**, as a result of the selection set **AₚAₚ**, device **100** generates and displays in candidate section **108** three candidates As, Sa, and Aa. Moreover, in entry section **106**, device **100** shows one of the candidates, here As, as the default candidate. The user can change the entry shown in entry section **106** by selecting another entry from the candidates shown in candidate section **108**.

In some embodiments using the predictive text entry mode, device **100** also predicts and presents to the user one or more complete candidate words that start with the candidate N-gram. In these embodiments, a user can thus find and select the desired word after entering only a part of the word. For example, in the above described reduced mobile phone keypad where the user starts entering a text by selecting the 2 key and the 7 key, in some embodiments, device 100 not only displays candidate two letter combinations (e.g., AP, AQ, AR, AS, BR, and CR) but also displays one or more candidate complete words which start with one or more of these candidate two letter combinations (e.g., AQUARIUM, AQUA, ARITHMETIC, BRAIN, CREDIT, ARGON, BROTHER, ASTERISK, ASTRONOMY, APPLE). In some embodiments, device 100 displays the candidate words in order of the frequency of their usage in the language. In some other embodiments, device 100 displays the candidate words in alphabetical order. In various embodiments, if the user finds the desired word among the displayed candidate words, the user can select the desired word by the one of the above described selection mechanisms. In some embodiments, if device 100 cannot fit the complete set of candidates on the screen, device 100 displays a part of the set and, to see the rest, the user has to use a scrolling mechanism, for example, using scroll buttons or a touch screen motion for scrolling, to scroll up or down through the list of candidates.

In some embodiments, to determine acceptable combinations or candidate words, device 100 searches a database of linguistic objects for those words that can start with the detected selection set or that correspond to the detected selection set. In some embodiments, the database of linguistic objects is stored in a local memory in device 100. In some other embodiments, the database of linguistic objects can be a remote database, such as a dictionary, that device 100 accesses through a network connection. In some embodiments, device 100 also builds the database or enhances it by adding words commonly entered by a user and uses those words when predicting a user's candidates in the predictive mode.

Therefore, in the multi-tap mode the user enters each character with one or more selections of the same key, and device 100 detects the entry of the character with certainty. Once the user enters a character in the multi-tap system, that character is fixed, or "locked". In the predictive mode, on the other hand, the user needs to select an overloaded key only once for entering one of the characters associated with that key. However, because the key is overloaded, the text entry is ambiguous and device 100 interprets the selection as a possible entry of any of the characters associated with the key. Device 100 further may narrow the choices by deleting those choices that cannot create an accepted word, or by limiting the choices to those entries that the user actively selects via a selection mechanism.

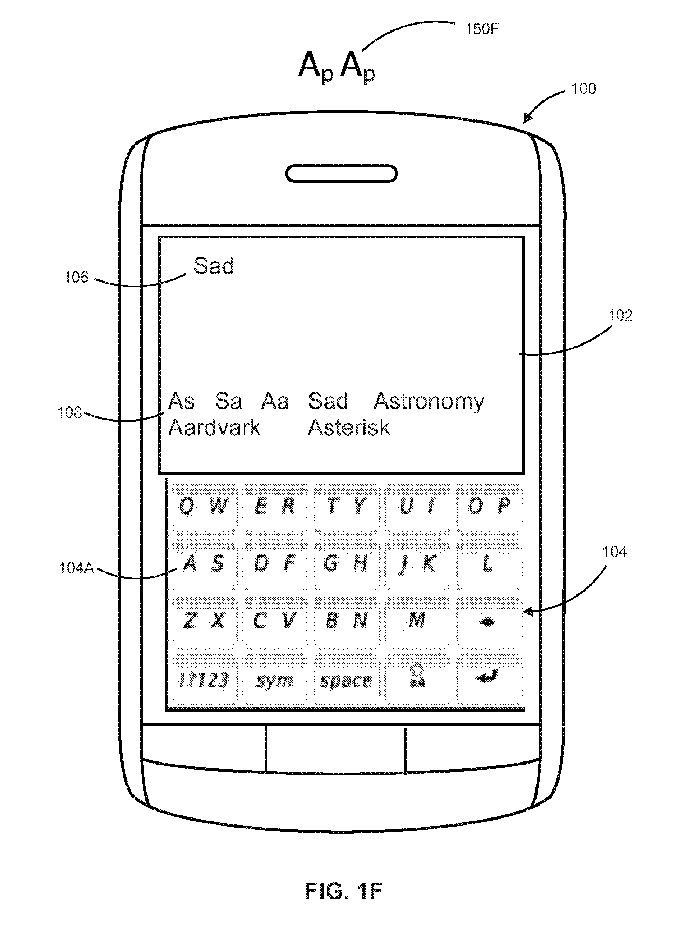

Fig. **1F** shows device **100** after entry of a selection set **"AₚAₚ**", as indicated by label **150E,** according to some embodiments. As shown in Fig. **1F****,** in addition to two letter candidates As, Sa, and Aa, device **100** also generates and displays in candidate section **108**, the word candidates Sad, Astronomy, Aardvark, and Asterisk, each of which represents a completed word that starts with two letter combinations corresponding to the selection set "**ApAp**". Moreover, in entry section **106**, device **100** shows one of the candidates displayed in candidate section **108**, here the word Sad, as the default selection. In some embodiments, device **100** selects and shows an N-gram that is an incomplete word from the candidates as the default selection. In some embodiments, device **100** sorts and displays the candidates in a descending order of their usage frequency in the language and selects the first one as the default selection. In some other embodiments, device **100** sorts and displays the candidates in a descending alphabetical order and selects the first one as the default selection. A user may select one of the candidates in candidate section **108** using a selection mechanism as, for example, described above.

The multi-tap and predictive systems present alternative mechanisms for entering text in an overloaded keyboard and each has advantages and shortcomings as compared to the other. In the multi-tap system, for example, in some cases the user may need to select the same key for multiple times for entering a single letter. Thus, in the multi-tap system, the user selects the keys a numbers of times that is almost always larger and often many times the number of letters in the word. In the predictive system, on the other hand, in most embodiments and for most entries the user needs to select the keys a number of times that is at most equal to the number of letters in the desired words, and often even less, if device **100** predicts and presents the desired words before the user enters all letters. Thus, the predictive system generally requires less selections than the multi-tap system.

On the other hand, for some text entries in the predictive mode, the electronic device finds and presents a large number of candidates, many of which are not the desired words. For example, in the above described reduced mobile phone keypad, if the user intends to enter the word Apo as in Mt. Apo, the user starts by selecting the keys 2 and 7 and the electronic device presents the above listed candidate words (AQUARIUM, AQUA, ARITHMETIC, BRAIN, CREDIT, ARGON, BROTHER, ASTERISK, ASTRONOMY, APPLE ...) that do not include Apo, because Apo is an uncommon word. Even when the user enters the last character by selecting the 6 key (which is associated with letters M, N, and O), the displayed candidate words will possibly include APOLOGY, APOLLO, ARMENIAN, AROMATIC, and CROW, but will not include Apo, because Apo is less common than the displayed candidate words. Even if the electronic device finds Apo as a candidate, the device may list it after many other candidates, requiring the user to scroll down the list to reach the desired word. Similarly, the device cannot find words that are not in its list of acceptable words, for example, when the desired word is an uncommon letter sequence such as a password. Thus, it is often very difficult, and sometimes impossible, to enter such uncommon letter sequences in the predictive text entry mode. In the embodiments using the multi-tap mode, on the other hand, the user can enter each letter of the word as desired and thus the desired word will be the only option presented to the user. Therefore, for entering uncommon letter sequences, the multi-tap system is often more convenient than the predictive system.

In some embodiments, a user may prefer to use one text entry system for entering some of the words in a text and use another text entry system for entering other words in the same text. In some cases, a user may even wish to switch from one text entry system to another in the middle of a word. In some instances, the user may prefer to enter the first one or more letters using the multi-tap mode and then enter the remainder of letters in the predictive mode. For example, when entering a long and uncommon word, like Kilimanjaro, the user may wish to "lock" the first three letters, Kil, by using the multi-tap mode. Then, the user may wish to enter one or more of the remaining letters each by selecting once, in the ambiguous mode, the corresponding overloaded key. The user may make this decision because once the first three letters are "locked" via the multi-tap system, and although the next few letters are ambiguously entered via the predictive system, the device will predict words that must start with "Kil" and must be followed by characters that correspond to the subsequent ambiguous entries and also construct meaningful words. The number of words that satisfy all the above conditions may be low, thus allowing the user to quickly find and enter the desired word, Kilimanjaro. Otherwise said, once the first few letters are entered via the multi-tap mode, the user can avoid additional multi-tap selections needed by the multi-tap system, and instead complete the word with less selections made in the predictive mode.

Alternatively, in some cases, the user may decide to enter the first one or more letters using the ambiguous mode, and then enter one or more of the remaining letters in the multi-tap system. A user may make such decision when the desired entry includes a rare character in the middle. For example, when entering the word Orzo, the user may enter the first two letters in the predictive mode, and then "lock" in the letter z in the multi-tap mode, thus reducing the number of candidate words, and quickly entering the desired word, Orzo.

In some cases the user may even prefer to switch between two or more text entry systems more than once while entering letters of the same word or words of the same sentence. For instance, in the above example of entering the word Orzo, after entering the first two letters, "Or," in the ambiguous mode and then entering the third letter, "z", in the multi-tap mode, if there are still more than one candidate words, the user may enter the last letter, "o", in the ambiguous mode to further narrow the number of candidates.

Some embodiments allow the user to select one of two or more text entry systems by selecting one or more keys. For example, in some embodiments, the user can switch from one text entry system to another one by holding down a specific real key such as the star key, or a virtual key. In some other embodiments, the device is configured with one text entry system as the default, but the user can switch to another text entry system by changing a text entry option in the settings of the device. However, in these embodiments, switching between different text entry systems within the same word or within the same sentence requires multiple actions in addition to selection of input members used for text entry. Further, in the embodiments which use real or virtual keys to switch between text entry systems, the user may inadvertently activate the key, causing an unwanted switch between the text entry systems. Users who are not aware of this "feature" may find the switching inconvenient, or may not even know how to switch back to the previous system, and thus may have to seek technical assistance to resolve the unwanted switch.

Therefore, a seamless method and system for switching between text entry systems will be useful for achieving a better user experience and a higher speed for entering text. Moreover, a system and method will be useful if such seamless switching is performed as part of selections normally used for text entry and if the switching does not require any additional selections.

In some embodiments, a user can switch between text entry systems by changing the physical manner in which the user selects an input member. In particular, in some embodiments, the user can enter each character in either of many modes by selecting the corresponding input member in a physical manner that corresponds to that mode. In those embodiments, thus, the device can detect one or more physical characteristics of the selection of the input members and thus determine the entry mode for the selection. For example, in some embodiments, the device can detect, or at least can differentiate between two or more levels of, the pressure applied to the input member when the input member is selected. In some other embodiments, the device can detect, or at least differentiate among two or more amounts of, the length of time the input member is held when it is selected.

Accordingly, in some embodiments the user determines the entry mode by the amount of pressure that the user applies to the input member. In some other embodiments, the user determines the entry mode by the length of time that the user holds the input member when selecting the input member. Yet, in some other embodiments, the user determines the text entry mode by a combination of the pressure and the length of time applied when selecting the input member.

In some embodiments, the user enters a character in the predictive mode by "clicking" an input member, and enters a character in the multi-tap mode by "tapping" on an input member. In some embodiments, a user "clicks" an input member by actuating, or pressing the input member, for example, by applying a relatively high pressure on the input member. Alternatively, in some embodiments, a user "taps" on an input member by applying a relatively low pressure on the input member. In some embodiments, a "clicking" amounts to pressing down a key while a "tapping" amounts to merely touching the key. Yet in some other embodiments, a user "taps" a key by touching and quickly releasing the key while the user "clicks" the key by holding the key for a short period of time. For example, in some embodiments, in a "tap" the key is touched for less than a tenth of a second while in a "click" the key is touched for more than a tenth of a second. In yet other various embodiment, the duration that differentiates between a tap and a click is longer or shorter than a tenth of a second. A pressure sensitive key such as a capacitive key, can be used to differentiate between different amounts of pressure applied to the key. Similarly, a capacitive key, or a virtual key on a touch sensitive screen can be used to differentiate between different durations of time that a key is selected. In yet other embodiments, a click corresponds to a multi-tap mode entry and a tap corresponds to a predictive mode entry.

Therefore, in accordance with some embodiments, a device can operate in a mixed text entry mode, also known as mixed entry mode or mixed mode, in which a user can enter each character in one of two or more modes. In the mixed mode, a device determines the mode of entry for each character by determining whether the selection was a click or a tap. Fig. **2A** shows a front view of an example handheld electronic device **200** operating in the mixed text entry modes according to the present disclosure. Device **200** includes a display **202** and a set of input members **204**. Display **202** includes an entry section **206** and a candidate section 208. In the case shown in Fig. 2A, the user enters the selection set **AₚEₘ** (shown in label **250A**) by clicking input member **204A** and then tapping input member **204E.** By detecting the click followed by the tap, device **200** thus determines that the first selection is in the predictive mode and the second selection is in the multi-tap mode. Device 200 thus generates candidate entries Ae and Se, which correspond to the selection set **AₚEₘ** and displays them in candidate section **208,** and also displays one of those candidates, in this case Ae, in the entry section **206**.

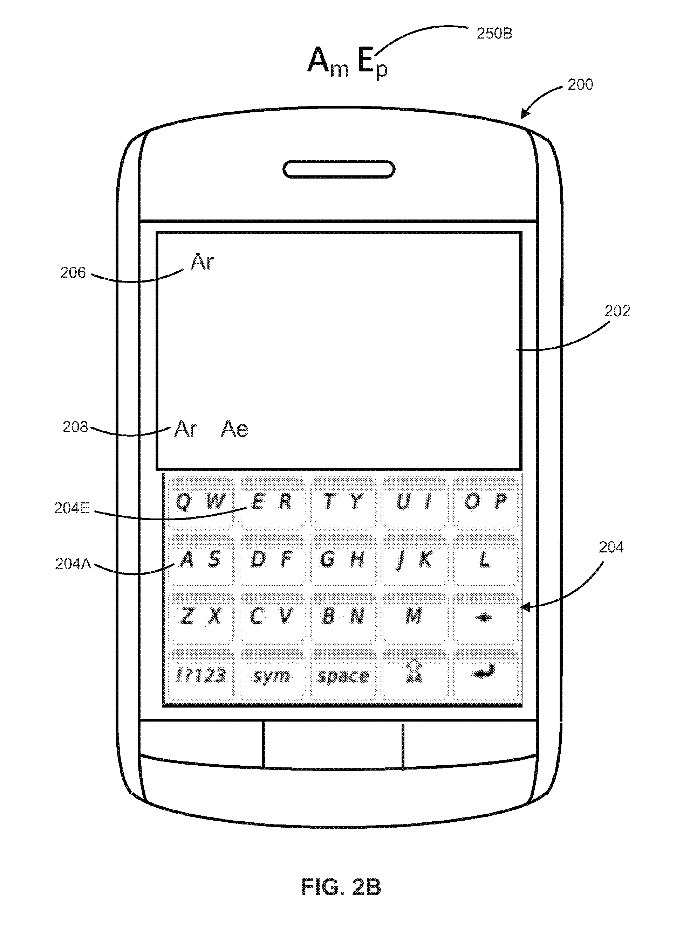

Fig. **2B** shows another example of the operation of device **200** operating in the mixed entry mode, in accordance with an embodiment. In the case shown in Fig. **2B****,** the user enters the selection set AₘEₚ (shown in label **250B)** by tapping on input member **204A** and then clicking input member **204E.** By detecting the tap followed by the click, device **200** thus determines the first selection is in the multi-tap mode and the second selection is in the predictive mode. Device **200** thus generates candidate entries Ar and Ae, which correspond to the selection set **AₘEₚ** and displays them in candidate section **208,** and also displays one of those candidates, in this case Ar, in the entry section **206**.

Thus, in the mixed entry mode, the user can seamlessly switch between the predictive and multi-tap modes by switching between clicking and tapping the input members, and the user does not need any additional operations such as selecting any other key or changing the settings of device **200.** As the user enters consecutive characters of the desired word, the device determines the entry mode of each character and accordingly find and adjust the candidate entries and the desired entry.

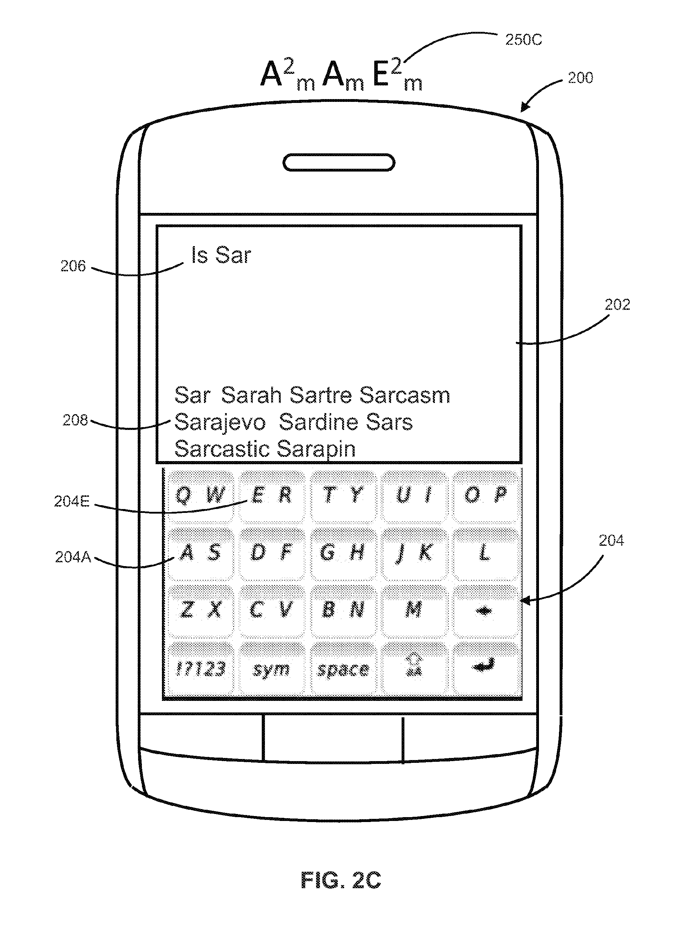

Fig. **2C** shows another example of the operation of device **200** operating in the mixed entry mode, in accordance with an embodiment. In the case shown in Fig. **2C**, the user intends to enter the question "Is Saratov in Russia?" To that end, in the snapshot shown in Fig. **2C**, the user has already entered a first word "Is", and is in the middle of entering the second word "Saratov". For the second word, the user has entered the selection set **A²ₘAₘE²ₘ** (shown in label **250C)** by tapping twice on input member **204A**, pausing, tapping once again on input member **204A**, and finally tapping twice on input member **204E.** Device **200** thus detects the selection set **A²ₘAₘE²ₘ**, all entered in the multi-tap mode, and determines the second entry to begin with the three letters "Sar", as shown in entry section **206**. Moreover, in candidate section **208**, device **200** displays a set of complete words that start with the entry "Sar", that is, according to this example, eight candidate words Sarah, Sartre, Sarcasm, Sarajevo, Sardine, Sars, Sarcastic, and Sarapin. Device **200** may also find the desired word "Saratov", but may not display it because, for example, Saratov has a lower occurrence frequency compared to the displayed words or because it can not fit Saratov in candidate section **208**. In some embodiments, a user can see additional candidate entries by scrolling down the list of candidate entries in candidate section **208**.

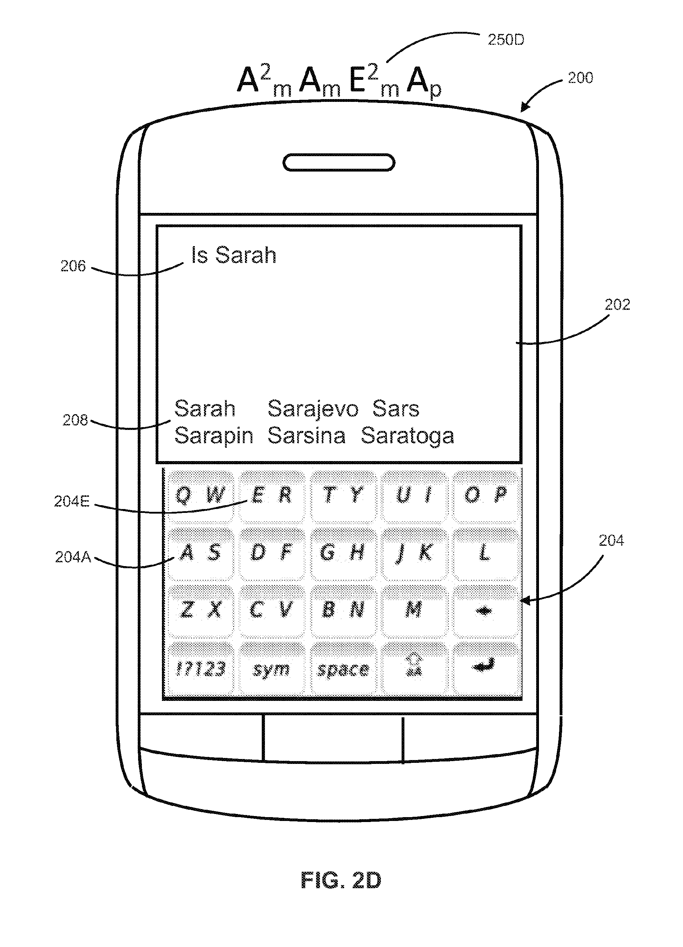

Fig. **2D** shows the next snapshot in entering the desired word "Saratov". In Fig. **2D**, the user has next clicked input member **204A**, thus adding a selection **Ap** to the already entered selection set and creating the selection set **A²ₘAₘE²ₘAₚ** (shown in label **250D**). Device **200** thus detects the added selection **Aₚ**, and determines the next character to be an ambiguous entry, that is, either A or E, each associated with input member **204A**. Device **200** thus updates the set of candidate words in candidate section 208 based on the added selection, such that the candidate words match the selection set **A²ₘAₘE²ₘAₚ**. In particular, in the example of Fig. **2D**, device **200** displays in candidate section **208** six candidate words Sarah, Sarajevo, Sars, Sarapin, Sarsina, and Saratoga. At this stage, the user may scroll down the candidate words to find out whether device **200** has included the desired word "Saratov" further down the list and, if so, select the desired word using a selection mechanism. Alternatively, the user may choose to further narrow the candidates by entering additional letters of the desired word.

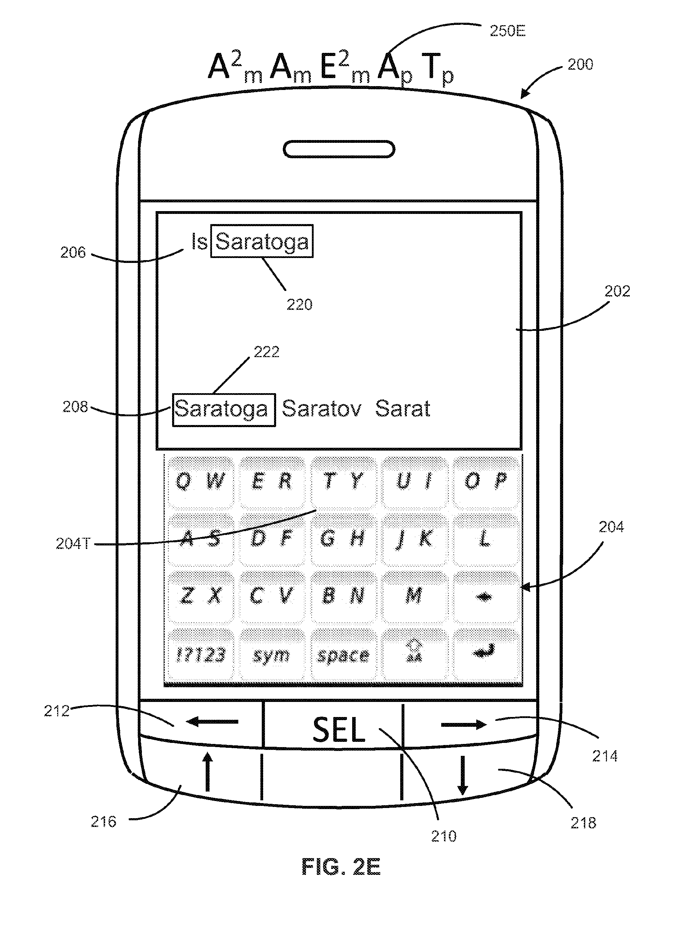

Fig. **2E** shows an example of the next step to further narrow the candidates by entering additional characters. In the snapshot shown in Fig. **2E**, the user has next clicked input member **204T**, thus adding a selection Tp to the already entered selection set and creating the selection set **A²ₘAₘE²ₘAₚTₚ** (shown in label **250E**). Device **200** thus detects the added selection Tₚ, and determines the next character to an ambiguous entry, that is, either T or Y, each associated with input member **204T.** Device **200** thus updates the set of candidate words in candidate section 208 based on the added selection, such that the candidate words match the selection set **A²ₘAₘE²ₘAₚTₚ**. In particular, in the example of Fig. **2E**, device **200** displays in candidate section **208** three candidate words Saratoga, Saratov, and Sarat. At this stage, because device **200** has included the user's desired word, Saratov, among the displayed candidate words, the user may use a selection mechanism to select and add that desired word to the entry at entry section **206**.

In the embodiments shown in Fig. **2E**, device **200** further includes a selection mechanism which includes a selection key **210** and left, right, up, and down arrow keys **212**, **214, 216**, and **218**. Moreover, to display the selection, entry section **206** includes an active entry box **220** and candidate section **208** includes a selection box **222.** Active entry box **220** encloses the word that is being entered by the user and is still incomplete. Selection box **222** encloses the one candidate among the candidates in candidate section **208** that has been selected to be displayed in active entry box **220**.

A user may use arrow keys **212, 214, 216**, and **218** to move selection box **222** to different candidates shown in candidate section **208.** After each move, the content of active entry box **220** changes to display the candidate enclosed by selection box **222**.

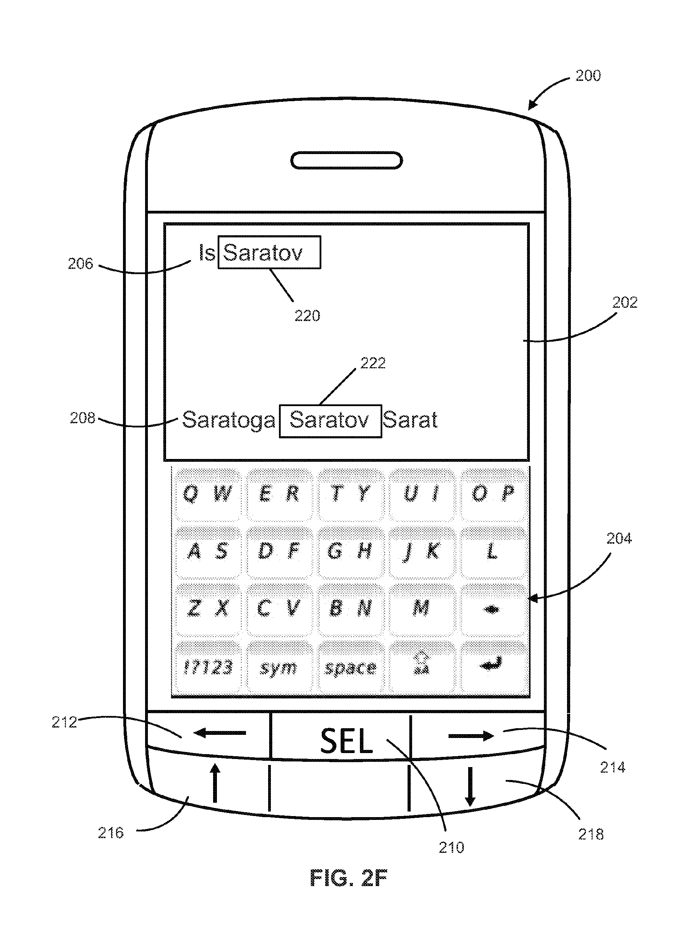

Fig. **2F** shows device **200** after the user has pressed right arrow **214** in Fig. **2E**. As a result, selection box **222** has moved to the second word in candidate section **208**, that is, Saratov. Moreover, the entry in active entry box **220** has changed to the new selection, Saratov. At this stage, user may decide to "lock" the selected entry by selecting selection key **210**. By locking the selection, device **200** completes generating the second word and moves on to accepting entries for the rest of the text. In some other embodiments display **202**, and in yet other embodiments candidate section **208** of display **202**, is touch sensitive, and the user can select one of the words in the candidate section **208** by touching over that word. In other embodiments, after device **200** displays the desired word in active entry box **220**, the user can complete entering the word by entering a delimiter, for example, a space or a punctuation such as a period or a comma, each indicating that the user has completed entering the previous word. Upon detecting the delimiter, device **200** accepts the word displayed in active entry box **220**, adds the entered delimiter after it, and awaits for receiving the rest of the text.

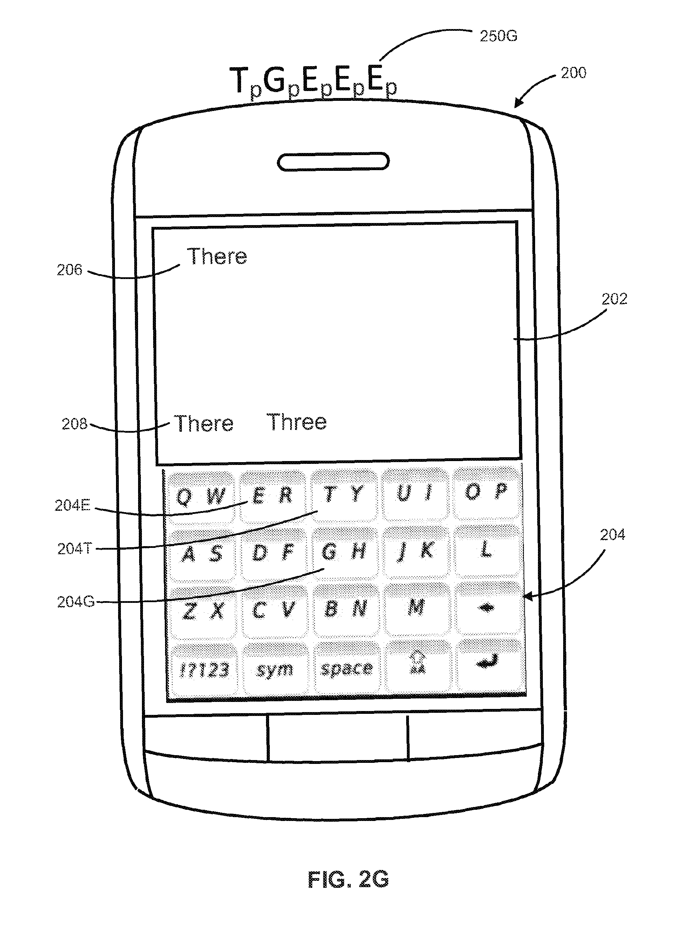

Fig. **2G** shows another example of the operation of device **200** operating in the mixed entry mode, in accordance with an embodiment. In Fig. **2G****,** the user intends to enter the word "Three". To that end, the user has entered the selection set **TₚGₚEₚEₚEₚ** (shown in label **250G**) by clicking input members **204T** and **204G** each once and then clicking input member **204E** three times. By detecting these clicks, device **200** determines that there are five selections all in the predictive mode. Device **200** thus generates and displays in candidate section **208** two candidates "There" and "Three", both of which correspond to the selection set **TpGpEpEpEp**. Moreover, device **200** displays the word "There" as the default selection in entry section **206**. At this stage, the user may select the desired word "Three" form among the two candidates. Alternatively, the user may have chosen to enter a different selection set to avoid the ambiguity between the two candidate words, "There" and "Three", by entering some of the letters in the multi-tap mode. Using the multi-tap mode, however, differentiates between the two if applied to the letters that are not shared, that is, the third or fourth letters "r" or "e".

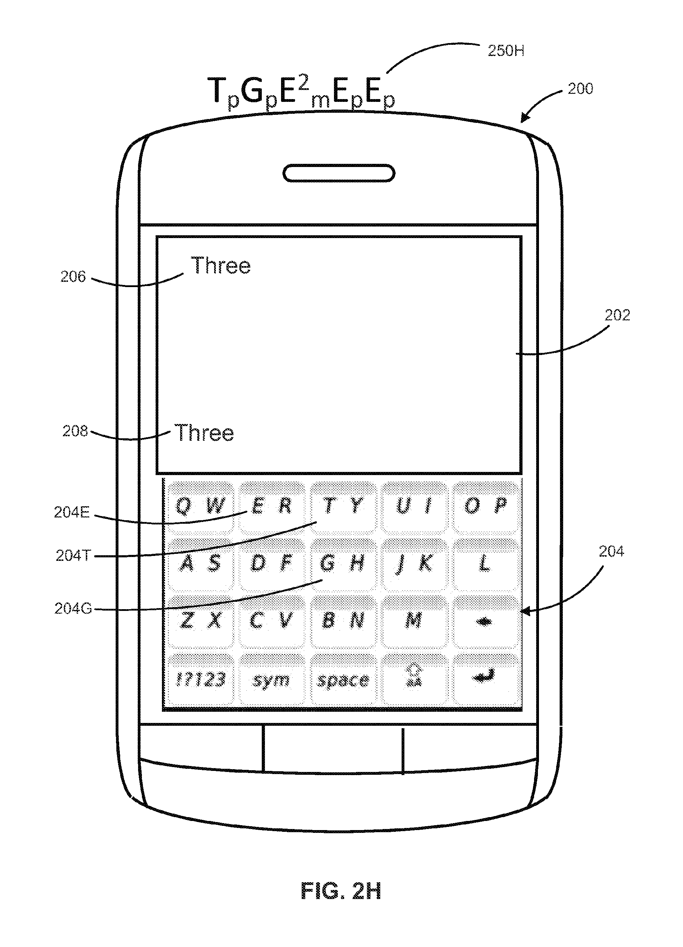

Fig. **2H** shows an example of the operation of device **200** after receiving such a mixed selection set, in accordance with an embodiment. In Fig. **2H**, the user has entered the selection set **TₚGₚE²ₘEₚEₚ** (shown in label **250H**) by clicking input members **204T** and **204G** each once, then consecutively tapping input member **204E** twice, and then clicking input member **204E** two times. By detecting these selections, device **200** thus determines the first two selections are in predictive mode, the next two selections is a two tap selection of input member **204E** in the multi-tap mode, and that the last two selections are two consecutive selections of input member **204E**, each in the predictive mode. Device **200** thus generates and displays in candidate section **208** and in entry section **206** one entry "Three", which corresponds to the selection set **TₚGₚE²ₘEₚEₚ**. Thus, by entering the third letter, "r", in the multi-tap mode, via the selection E²ₘ, the user locks this letter and thus excludes the word "There" from consideration by device **200**.

The example of Fig. **2G** depicts a case in which a user finds it useful to enter a desired word by switching back and forth between predictive and multi-tap modes. In some embodiments, a user may prefer to minimize the use of the multi-tap mode to reduce the number of selections, and thus use the multi-tap mode only for those letters that best differentiates the desired words from other possible candidate words. In yet some other embodiments, a user may prefer to enter most or all of the characters in the multi-tap mode because for the user tapping the input members is faster than clicking the input member. Alternatively, a user may prefer entering most or all of the characters in the multi-tap mode because multi-tap mode locks the characters, reduces the ambiguity in the candidate words, and thus saves the time and additional operations needed to scroll the candidates, find the desired word, and then select the desired word.

In some embodiment, the device chooses one text entry mode as the default mode. For example, in some embodiments, the device chooses the predictive mode as the default mode. Thus, if the device receives a selection that can be interpreted as either a click or a tap, the device interprets the selection as a click, that is, a selection in the predictive mode. Therefore, a user can enter most characters in the predictive mode by freely clicking the input members and only when intending to enter a character in the multi-tap mode, the user needs to pay extra attention to the way the user selects an input member; that is, by making sure that the correct amount of pressure or duration or another physical character, corresponding to a tap, is applied to the input member. Alternatively, in some other embodiments, the device chooses the multi-tap mode as the default mode, and interprets all selections as a tap, unless an input member is pressed hard enough, or held long enough, that the selection clearly corresponds to a click.

In some embodiments, a user can change the default text entry mode by, for example, changing the settings of the device. In some other embodiments, the device dynamically selects or changes a default mode based on the text entry habits of the user, for example, based on a history of the last text entries by a user. To that end, a device keeps a count of the two or more text entry modes that have been used most of the time during last N number of entries, for example, last 1000 entries, and accordingly, sets the default text entry mode as the text entry mode that has mostly been used. In some embodiments, the user can turn off this dynamic default mode determination in the device settings and, for example, manually set a default mode.

In some embodiments, a user may wish to turn off the mixed entry mode mechanism and instead set the device to use only one text entry mode at all text entries. Such a single text entry mode is preferable, for instance, for entry of a word that is not in the database of linguistic objects, such as an uncommon letter sequence. An uncommon letter sequence can be, for example, a password, a nickname, or a shorthand name in an address book.

Fig. **3A** shows a front view of a handheld electronic device **300** operating in the mixed entry mode, in accordance with an embodiment. Device **300** includes a display **302** and a set of input members **304**. The set of input members **304** is in the form of a mobile phone keypad. In some embodiments, when each of the overloaded keys **2** to **9** is selected once in the predictive mode, the selection is interpreted by device **300** as entering any one of the characters associated with the key in the ambiguous mode. On the other hand, when each of the overloaded keys **2** to **9** is selected in the multi-tap mode once or several times repeatedly, device **300** interprets the selection as entering a specific one of the characters associated with the selected key. Device **300** thus circles through characters associated with the key, ending each round with the associated number. That is, for example, tapping the key "2" (i.e., input member 304-2) once, twice, or thrice is interpreted as entering the letters "A", "B", and "C", respectively, tapping the same key four times in a row is interpreted as entering the number "2" , and tapping it five times in a row is once again interpreted as entering the letter "A", and so on.

Display **302** includes an entry section **306**. In the example shown in Fig. **3A**, entry section **306** is for entering a password into a password field. In the case shown in Fig. **3A**, the user has entered a password "7RA2MA8Z" by entering the selection set **7⁵ₘ7³ₘ2¹ₘ2⁴ₘ6¹ₘ8⁴ₘ9⁴**_{**m**.} That is, because the password "7RA2MA8Z" is an uncommon letter sequence, the user has not used the predictive mode and has instead used multi-tap mode for entering all characters in the password. In particular, in some embodiments, the user enters the selection set **7⁵ₘ7³ₘ2¹ₘ2⁴ₘ6¹ₘ8⁴ₘ9⁴ₘ** by tapping on keys 304-2, 304-6, 304-7, 304-8, and 304-9 in the order and in the number of times indicated by the selection set **7⁵ₘ7³ₘ2¹ₘ2⁴ₘ6¹ₘ8⁴ₘ9⁴ₘ**. However, in some embodiments, the device allows the user to turn off the mixed entry mode and select one entry mode, in this case the multi-tap mode, as a single preset mode. In that way, the user need not worry about different ways to select an input member, for example, tapping and clicking. Instead, the user can select input members in either way, for example, by clicking or tapping, and the device will interpret that selection only in the preset entry mode, for example, multi-tap mode.

Fig. **3B** shows a front view of a handheld electronic device **350** that can operate in the mixed entry mode as well as in a single mode. Device **350** includes a display **302** and a set of input members **304**, in the form of a mobile phone keypad. Device **350** also includes three mode selection keys **310, 312**, and **314** for selecting mixed, predictive, and multi-tap text entry modes, respectively. Moreover, display **302** includes a mode display section **316** for displaying the text entry mode used that is active at any time. In some embodiments, device **350** selects one of the three text entry modes as the default text entry mode when it starts operation. The user can, however, switch to a different text entry mode by selecting the corresponding key from among the three mode selection keys **310, 312**, and **314**.

In particular, in the example shown in Fig. **3B****,** similar to the example of Fig. **3A**, the user has entered the text "7RA2MA8Z" in the entry section **306**. To that end, before entering the text, the user has first switched to the multi-tap mode by selecting mode selection key **314**. As a result, mode display section **316** displays "MT" indicating that device **350** has switched to the single mode and interprets all entries in the multi-tap mode. Next, the user has entered the selection set **7⁵7³2¹2⁴6¹8⁴9⁴** by selecting input members 304-2, 304-6, 304-7, 304-8, and 304-9 in the order and in the number of times indicated by the selection set **7⁵7³2¹2⁴6¹8⁴9⁴**. Here, unlike the case of Fig. **3A**, the user can select the input members by either clicking or tapping, and in either case, the device will interpret the entry as a multi-tap entry. Moreover, in some embodiments, to enter first and second characters both of which correspond to the input member 304-7 (the "7" key), the user must select the "7" key by first entering five consecutive selections with no pause, then pausing, and then entering the next three consecutive selections with no pause. In this way, device **350** interprets the selections as entering two separate characters respectively corresponding to "7" and "R". Similarly, to enter the third and fourth characters, both of which correspond to the input member 304-2 (the "2" key), the user must repeatedly select the "2" key a total of five times, with a pause between the first and the second selections.

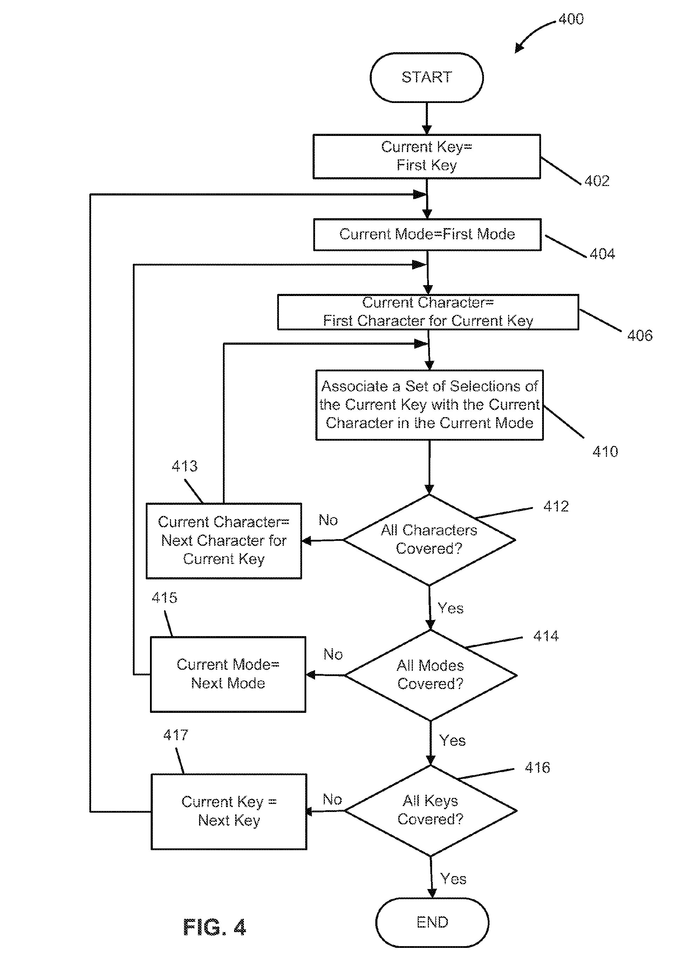

In some embodiments, for the device to operate in the mixed mode, the device has to be set up to detect different types of selections and to interpret each selection as a selection in one of a plurality of text entry modes. To that end, various selections of input members needs to be associated with different characters in different text entry modes. Fig. **4** illustrates a selection association method **400** performed by a device such as device **200** in Fig. **2A**, in accordance with an embodiment.

In block **402**, the current key is initialized to be a first of the plurality of input members in the device. For example, for the device **200** in Fig. **2A**, the first input member can be the top left input member **204Q** corresponding to letters Q and W. In block **404**, the current mode is initialized to a first of the multiple modes in the mixed mode system. For example, the first mode can be the multi-tap mode. Next, in block **406**, the current character is initialized to the first character corresponding to the current key. In the example of Fig. **2A**, the first character corresponding to input member **204Q** is the character Q.

In block **410**, a set of selections of the current key is associated with entering the current character in the current mode. For instance, in the next step of the above example, device **200** associates one tap of input member **204Q** with entering the character **Q** in the multi-tap mode. More generally, to account for looping through characters when a key is repeatedly tapped, device **200** associates with character Q all odd numbers of taps of input member **204Q**, that is one tap, three taps, five taps, etc.

Next, in decision block **412,** it is decided whether all characters corresponding to the current key have been associated in the current mode with some set of selections of the current key, that is, whether the selection association is complete for the current key in the current mode. If not (decision block **412:** No), in block **413** the current character is updated to the next character corresponding to the current key. For instance, in the above example of device **200**, the next character corresponding to input member **204Q** is the character W.

Method **400** then moves back to block **410,** in which a set of selections of the current key is associated with entering the current character in the current mode. For instance, in the next step of the above example, device **200** associates with entering character W in the multi-tap mode two taps, or in general any even number of taps, of input member **204Q.** The set of selections considered in block **410** can be a new set of selections of the current key that has not already been associated with any character. For instance, in the above example, in the multi-tap mode different numbers of taps of the same input member are associated with entering different characters corresponding to that input member. However, in some embodiments and for some text entry modes, one set of selections of the same input member is associated with different characters corresponding to the input member. For example, in the ambiguous mode, one click of input member **204Q** is associated with both characters Q and W.

If in decision block **412**, it is decided that the selection association is complete for the current key in the current mode (decision block **412:** Yes), method **400** moves to decision block **414** in which it is decided whether the selection association is complete for all modes for the current key.

If the answer is no (decision block **414**: No), in block **415** the current mode is updated to the next mode that has not been yet covered corresponding for the current key. For instance, in the above example of device **200**, device **200** next moves to the predictive mode for input member **204Q**. Method **400** then moves back to block **406** to initialize the current character to the first character corresponding to the current key and then associates selections of the current key to all characters corresponding to the current key in the current mode, through the character loop including blocks **410, 412,** and **413**.

If, on the other hand, in decision block **414** it is decided that the selection association is complete for all modes for the current key (decision block **414**: Yes), method **400** moves to decision block **416** in which it is decided whether the selection association is complete for all modes for all keys.

If the answer is no (decision block **416**: No), in block **417** the current key is updated to the next key that has not been yet covered. For instance, in the above example of device **200,** device **200** next moves to the input member **204E** corresponding to letter E and R. Method **400** then moves back to block **404** to initialize the current mode to the first mode and then associates selections of the current key with all characters corresponding to the current key in all modes through the mode and character loops including blocks **406, 410, 412, 413, 414**, and **415**.

If, on the other hand, in decision block **416** it is decided that the selection association is complete for all modes for all keys (decision block **416**: Yes), the selection association method **400** is completed.

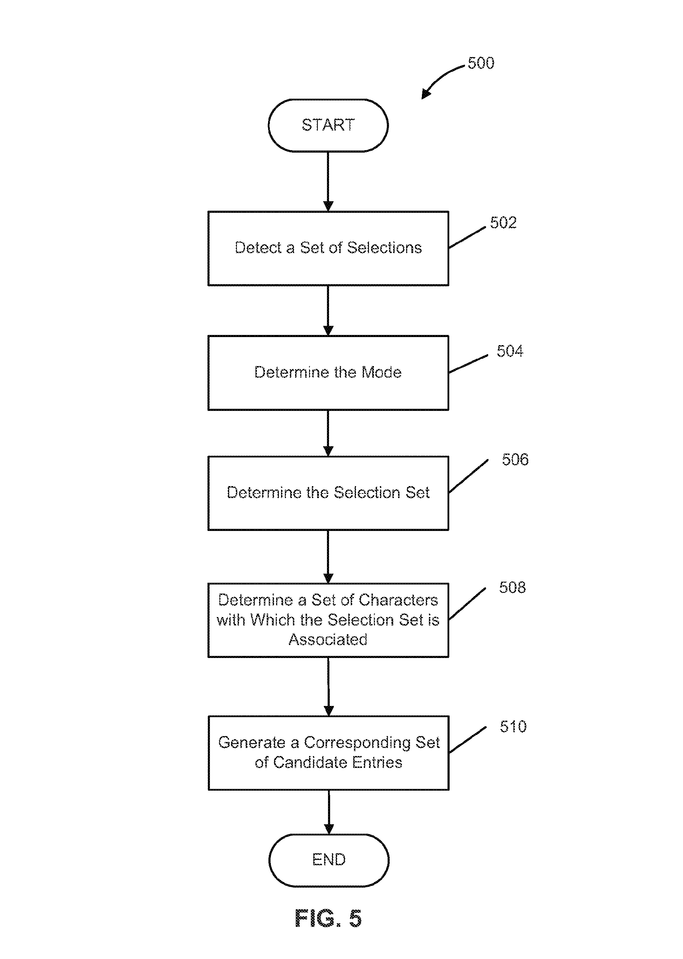

In some embodiments, while generating text based on user input, the device detects one or more selections of one or more of the input members of the device, and accordingly generates text. Fig. **5** illustrates a text generation method **500** performed by a device, for example, by device **200** in the snapshots shown in Figs. **2C** and **2D****,** in accordance with an embodiment. In the snapshot of Fig. **2C**, for example, the device has already generated the word "Is" followed by a space, and has also already received the selection set A²ₘAₘ for entering the first two letters of the next desired word.

In block **502**, a set of selections is detected for generating the next character in the text. For instance, in the example of Fig. **2C**, device **200** next detects the set of selections E²ₘ entered for the third letter of the desired word. More specifically, device **200** detects two consecutive selections of input member **204E** with no long pauses between the two selections. Device **200** thus records a selection set E², for which the text entry mode is yet to be determined based on the characteristics of the detected selection. Similarly, in the snapshot shown in Fig. **2D**, device **200** receives the set of selections Aₚ.

In block **504**, the text entry mode is determined by determining one or more physical characters of the set of selections that characterize the entry mode. In some embodiments, the pressure applied for each selection in the last set of selections is detected. For instance, in the example of Fig. **2C**, in some embodiments device **200** determines that in the last selection set input member **204E** has been pressed lightly in a manner that is defined for a tap, and thus the two selections were two consecutive taps of input member **204E** made in the multi-tap mode. In some other embodiments, the device detects the duration of each selection in the last set of selections. For instance, in the example of Fig. **2C**, in some embodiments device **200** determines that in the last selection set input member **204E** has been selected twice, each time for a short time as defined for a tap, and with no long pause between the two taps; thus determining the two selections to have been two consecutive taps in the multi-tap mode.

In block **506,** the information about the detected selections and the determined mode are combined to determine the selection set. For instance, in the example of Fig. **2C**, in some embodiments device **200** combines the information about the two consecutive selections of input member **204E** and that the mode is determined to be the multi-tap mode and determines that the detected selection corresponds to the selection set E²ₘ. As another example, after the next text entry shown in Fig. **2D****,** device **200** determines, in block **506**, that the detected selection set is be Aₚ.

In block **508**, method **500** determines a set of characters with which the detected selection set has been associated via, for example, method **400** of Fig. **4**. For instance, in the example of Fig. **2C**, in some embodiments device **200** determines that the last detected selection set E²ₘ is associated with the letter "r". As another example, in the case shown in Fig. **2D**, in block **508** device **200** determines that the last detected selection set Aₚ is associated with the letters "a" and "s".

In block **510**, the set of characters determined in block **508** is combined with previously determined set of characters for the same word to generate a set of candidate n-grams that correspond to the n member selection set received so far for the active entry. The device then includes the set of candidate n-grams in a set of candidate entries and in some embodiments presents the set of candidate entries to the user. For instance, in the example of Fig. 2C, device **200** combines the character "r", determined in block **508,** with the previously determined set of candidate 2-grams ("Sa") corresponding to the previously detected selection set **(A²ₘAₘ)** and generates a set of candidate three-grams. In particular, in the case of Fig. **2C****,** because all entries have been in the multi-tap mode and thus unambiguous, device **200** determines only one candidate 3-gram, that is, "Sar", which corresponds to the three letter selection set **A²ₘAₘE²ₘ**". As another example, in the case of Fig. **2D**, device **200** combines the letters "a" and "s" determined in block **508**, with the previously determined candidate 3-gram (that is, "Sar" from Fig. 2C) to generate two candidate 4-grams "Sara" and "Sars".

Moreover, in some embodiments, in block **510** it is determined which of the candidate n-grams are acceptable n-grams and the unacceptable n-grams are deleted from the list of candidate n-grams. For example, in the snapshot of Fig. **2D**, device **200** keeps both candidate 4-grams (Sara and Sars) because both of them are acceptable 4-grams.

Further, in some embodiments, in block **510**, method **500** also determines a set of complete words that start with the candidate n-grams, and includes that set of complete words in the set of candidate entries. For instance, in the example of Fig. **2C**, in addition to the candidate 3-gram Sar, device **200** also determines a set of complete candidate words that start with Sar, that is eight candidate words Sarah, Sartre, Sarcasm, Sarajevo, Sardine, Sars, Sarcastic, and Sarapin, and includes the candidate words in the set of candidate entries displayed in candidate section **208**. Similarly, in the example of Fig. **2D**, in addition to the candidate 4-grams Sara and Sars, device **200** also determines and displays a set of complete words that start with the candidate 4-grams, that is, Sarah, Sarajevo, Sarapin, Sarsina, and Saratoga.

Methods **400** and **500** shown in Figs. **4** and **5** are exemplary methods performed by some embodiments. In various other embodiments, some of the steps are omitted, other steps are added, some of the steps are re-ordered, and some of the steps are combined. For example, in some embodiments, in method **400** the outer loop circles over different modes, and for each mode, the next inner loop covers the input keys. Similarly, in some embodiments, in method **500** determining the mode (block **504**) is combined with detecting the selection set **(502)**.

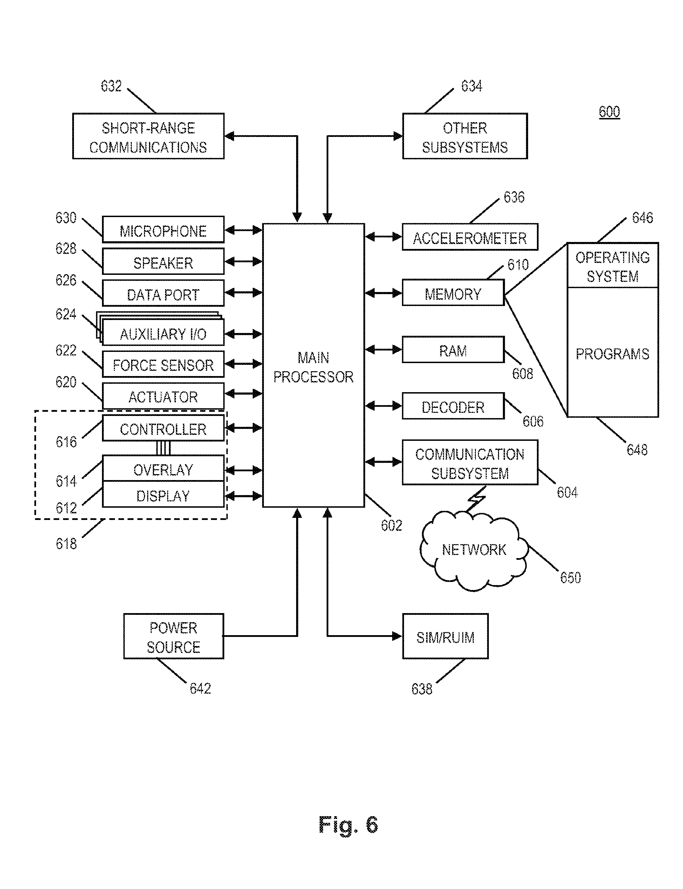

Fig. **6** shows a block diagram of an example of a handheld electronic device **600** according to some embodiments. Handheld electronic device **600** includes multiple components, such as a processor **602** that controls the overall operation of handheld electronic device **100.** Communication functions, including data and voice communications, are performed through a communication subsystem **604.** Data received by handheld electronic device **600** is decompressed and decrypted by a decoder **606.** Communication subsystem 604 receives messages from and sends messages to a wireless network **650.** In various embodiments, wireless network **650** is one of various types of wireless network, including, but not limited to, data wireless networks, voice wireless networks, and networks that support both voice and data communications. A power source **642,** such as one or more rechargeable batteries or a port to an external power supply, powers handheld electronic device **600**.

Processor **602** interacts with other components, such as Random Access Memory (RAM) **608**, memory **610**, a display **612** with a touch-sensitive overlay **614** operably connected to an electronic controller **616** that together comprise a touch-sensitive display **618**, one or more actuators **620,** one or more force sensors **622,** an auxiliary input/output (I/O) subsystem **624,** a data port **626,** a speaker **628,** a microphone **630,** short-range communications **632,** and other device subsystems **634.** In some embodiments, user-interaction with a graphical user interface is performed through touch-sensitive overlay **614.** Processor **602** interacts with touch-sensitive overlay **614** via electronic controller **616.** In various embodiments, various information, such as text, characters, symbols, images, icons, and other items that are displayed or rendered on a handheld electronic device , is displayed on touch-sensitive display **618** via processor **602**. In some embodiments, processor **602** interacts with an accelerometer **636** that is utilized to detect direction of gravitational forces or gravity-induced reaction forces. In some embodiments, processor **602** also performs different steps of methods **400** or **500**.

To identify a subscriber for network access, in some embodiments handheld electronic device **600** uses a Subscriber Identity Module or a Removable User Identity Module (SIM/RUIM) card **638** for communication with a network, such as wireless network 650. Alternatively, in some embodiments, user identification information is programmed into memory **610**.

Handheld electronic device **600 i**ncludes an operating system **646** and software programs or components **648** that are executed by processor **602** and are typically stored in a persistent, updatable store such as memory **610**. In some embodiments, additional applications or programs are loaded onto handheld electronic device **600** through wireless network **650**, auxiliary I/O subsystem **624**, data port **626**, short-range communications subsystem 632, or any other suitable subsystem **634**.

A received signal such as a text message, an e-mail message, or web page download is processed by communication subsystem **604** and input to processor **602**. Processor **602** processes the received signal for output to display **612** and/or to auxiliary I/O subsystem **624**. In some embodiments, a subscriber generates data items, for example e-mail messages, which is transmitted over wireless network **650** through communication subsystem **604**. For voice communications, the overall operation of handheld electronic device **600** is similar. Speaker **628** outputs audible information converted from electrical signals, and microphone **630** converts audible information into electrical signals for processing.

In various embodiments, touch-sensitive display **618** is one of various types of suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay **614**. In some embodiments, overlay **614** is an assembly of multiple layers in a stack including, for example, a substrate, a ground shield layer, a barrier layer, one or more capacitive touch sensor layers separated by a substrate or other barrier, and a cover. In various embodiments, the capacitive touch sensor layers include one of various suitable materials, such as patterned indium tin oxide (ITO).

In various embodiments, one or more touches, also known as touch contacts or touch events, are detected by touch-sensitive display **618.** Processor **602** then determines attributes of the touch, including a location of a touch or the direction of a sweeping touch. In some embodiments, touch location data include an area of contact or a single point of contact, such as a point at or near a center of the area of contact. In some embodiments, the location of a detected touch includes x and y components, for example, horizontal and vertical components, respectively, with respect to one's view of touch-sensitive display **618**. In some embodiments, the x location component is determined by a signal generated from one touch sensor, and the y location component is be determined by a signal generated from another touch sensor. A signal is provided to controller **616** in response to detection of a touch. In some embodiments, a touch is detected from any suitable object, such as a finger, thumb, appendage, or other items, for example, a stylus, pen, or other pointers, depending on the nature of touch-sensitive display **618.** In some embodiments, multiple simultaneous touches are detected.

In some embodiments, actuator **620** is depressed by applying sufficient force to touch-sensitive display **618** to overcome the actuation force of actuator **620**. In some embodiments, actuator **620** is actuated by pressing anywhere on touch-sensitive display **618**. In some embodiments, actuator **620** provides input to processor **602** when actuated. In some embodiments, actuation of actuator 620 results in provision of tactile feedback.

In some embodiments, a mechanical dome switch actuator is utilized. In some embodiments, tactile feedback is provided when the dome collapses due to imparted force and when the dome returns to the rest position after the release of the switch.

Alternatively, in some embodiments actuator **620** comprises one or more piezoelectric (piezo) devices that provide tactile feedback for touch-sensitive display **618**. Contraction of the piezo actuator(s) applies a spring-like force, for example, opposing a force externally applied to touch-sensitive display **618**. Each piezo actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to touch-sensitive display **618.** In some embodiments, the charge is adjusted by varying the applied voltage or current, thereby controlling the force applied by the piezo disks. In some embodiments, the charge on the piezo actuator is removed by a controlled discharge current that causes the PZT disk to expand, releasing the force thereby decreasing the force applied by the piezo disks. In some embodiments, the charge is advantageously removed over a relatively short period of time to provide tactile feedback to the user. In some embodiments, absent an external force and absent a charge on the piezo disk, the piezo disk is slightly bent due to a mechanical preload. In various embodiments, input members comprise a set of actuators **620**.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic text-generating device (200, 600) for generation of a text (206), the device comprising:
an input member (204) for which a set of selections in a first text entry mode corresponds to a first set of characters and the set of selections in a second text entry mode corresponds to a second set of characters, wherein the first text entry mode and the second text entry mode are two different modes of entering text; and
a processor (602) for generating the text in a mixed text entry mode, wherein the processor generates one of the first set of characters as part of the text in response to detecting the set of selections of the input member in the first text entry mode and generates one of the second set of characters as part of the text in response to detecting the set of selections of the input member in the second text entry mode.

2. The electronic text-generating device of claim 1, wherein the processor differentiates the set of selections of the input member in the first text entry mode from the set of selections of the input member in the second text entry mode based on a set of differences in the detected set of selections in the first text entry mode and the detected set of selections in the second text entry mode (504).

3. The electronic text-generating device of claim 2, wherein the set of differences includes a difference in a physical characteristic of the set of selections in the first text entry mode and the set of selections in the second text entry mode.

4. The electronic text-generating device of claim 3, wherein the difference in the physical characteristic includes a difference in an amount of pressure applied to the input member or a duration of selection of the input member.

5. The electronic text-generating device of claims 1-4, wherein a plurality of characters are associated with the input member, and wherein the first text entry mode is a multi-tap mode and the second text entry mode is a predictive mode, such that a specific number of selections of the input member in the multi-tap mode corresponds to a specific character of the plurality of characters and one selection of the input member in the predictive mode corresponds to each of the plurality of characters, and wherein, in response to detecting one selection of the input member in the predictive mode, the processor generates a set of candidate texts (208), each of the set of candidate texts includes one of the plurality of characters at a location corresponding to the one selection.

6. The electronic text-generating device of claim 5, wherein the input member is an input key (204, 304, 620) for which the set of selections in the first text entry mode is a set of taps and the set of selections in the second text entry mode is a set of clicks.

7. The electronic text-generating device of claim 6, wherein the input key is a capacitive key, a dome, or a pressure sensitive virtual key on a touch screen.

8. A method (400, 500) performed by a text-generating device for generation of a text (206, 208), the method comprising:
associating (410) a set of selections of an input member in a first text entry mode with a first set of characters and associating the set of selections on the input member in a second text entry mode with a second set of characters, wherein the first text entry mode and the second text entry mode are two different modes of entering text; and
generating text (510), via a processor (502) operating in a mixed text entry mode, wherein generating text comprises generating one of the first set of characters as part of the text in response to detecting the set of selections of the input member in the first text entry mode and generating one of the second set of characters as part of the text in response to detecting the set of selections of the input member in the second text entry mode.

9. The method of claim 8, wherein the processor differentiates the set of selections of the input member in the first text entry mode from the set of selections of the input member in the second text entry mode based on a set of differences in the detected set of selections in the first text entry mode and the detected set of selections in the second text entry mode.

10. The method of claim 9, wherein the set of differences includes a difference in a physical characteristic of the set of selections in the first text entry mode and the set of selections in the second text entry mode.

11. The method of claim 10, wherein the difference in the physical characteristic includes a difference in an amount of pressure applied to the input member or a duration of selection of the input member.

12. The method of claims 8-11, wherein a plurality of characters are associated with the input member, and wherein the first text entry mode is a multi-tap mode and the second text entry mode is a predictive mode, such that a specific number of selections of the input member in the multi-tap mode corresponds to a specific character of the plurality of characters and one selection of the input member in the predictive mode corresponds to each of the plurality of characters, and wherein, in response to detecting one selection of the input member in the predictive mode, the processor generates a set of candidate texts (208), each of the set of candidate texts includes one of the plurality of characters at a location corresponding to the one selection.

13. The method of claim 12, wherein the device comprises a plurality of input members, and wherein upon detecting a plurality of selections of the plurality of input members, the processor generates the set of candidate texts (208), each candidate text of the set of candidate texts including a plurality of characters corresponding to the plurality of selections.

14. The method of claims 8-11, wherein the text includes a plurality of characters, the method further comprising:
associating the plurality of characters with a plurality of selections of a plurality of input members of the device, wherein the plurality of selections includes a first subset of selection sets in the first text entry mode and a second subset of selection sets in the second text entry mode, to each selection set in the first subset of selection sets being associated with one character of a first subset of characters in the plurality of characters and to each selection set in the second subset of selection sets being associated with one character of a second subset of characters in the plurality of characters; and
generating, via the processor operating in the mixed text entry mode, the plurality of characters in response to detecting the plurality of selections irrespective of the order of the first and the second subset of characters and irrespective of whether the first or the second subset of characters are located contiguously in the plurality of characters.

15. The method of claims 8-11, further including switching to a single-mode state upon receiving a single mode input, wherein in the single-mode state the processor detects only one of the set of selections of the input member in the first text entry mode or the set of selections of the input member in the second text entry.

## Amended claims

### Amended claims in accordance with Rule 137(2) EPC.

**1.** An electronic text-generating device (200, 600) for generation of a text (206), the device comprising:
an input member (204A) for which a set of selections in a first text entry mode corresponds to a first set of characters and the same set of selections in a second text entry mode corresponds to a second set of characters that is different from the first set of characters, wherein the first text entry mode and the second text entry mode are two different modes of entering text and the set of selections in the first text entry mode differs from the set of selection in the second text entry mode in a set of detectable characteristics, and wherein the input member is an individual physical key or an individual virtual key; and
a processor (602) for generating the text in a mixed text entry mode, wherein the processor generates one of the first set of characters as part of the text in response to a first text entry that includes detecting the set of selections of the input member and determining, based on the set of detectable characteristics, that the first text entry is in the first text entry mode, and wherein the processor generates one of the second set of characters as part of the text in response to a second text entry that includes detecting the set of selections of the input member and determining, based on the set of detectable characteristics, that the second text entry is in the second text entry mode (504).

**2.** The electronic text-generating device of claim 1, wherein the set of detectable characteristics includes a physical characteristic.

**3.** The electronic text-generating device of claim 2, wherein the physical characteristic includes an amount of pressure applied to the input member or a duration of selection of the input member.

**4.** The electronic text-generating device of claims 1-3, wherein a plurality of characters are associated with the input member, and wherein the first text entry mode is a multi-tap mode and the second text entry mode is a predictive mode, such that a specific number of selections of the input member in the multi-tap mode corresponds to a specific character of the plurality of characters and one selection of the input member in the predictive mode corresponds to each of the plurality of characters, and wherein, in response to detecting one selection of the input member in the predictive mode, the processor generates a set of candidate texts (208), each of the set of candidate texts includes one of the plurality of characters at a location corresponding to the one selection.

**5.** The electronic text-generating device of claim 4, wherein the input member is an input key (204, 304, 620) for which the set of selections in the first text entry mode is a set of taps and the set of selections in the second text entry mode is a set of clicks, and wherein each tap corresponds to touching the input key for shorter than a specified time while each click corresponds to touching the input key for no shorter than the specified time.

**6.** The electronic text-generating device of claim 5, wherein the input key is a capacitive key, a dome, or a pressure sensitive virtual key on a touch screen.

**7.** The electronic text-generating device of claims 1-6, wherein the device is a handheld mobile device, a remote control for an electronic device, a laptop computer, or a desktop computer.

**8.** A method (400, 500) performed by a text-generating device for generation of a text (206, 208), the method comprising:
associating (410) a set of selections of an input member in a first text entry mode with a first set of characters and associating the same set of selections of the same input member in a second text entry mode with a second set of characters that is different from the first set of characters, wherein the first text entry mode and the second text entry mode are two different modes of entering text and the set of selections in the first text entry mode differs from the set of selection in the second text entry mode in a set of detectable characteristics, and wherein the input member is an individual physical key or an individual virtual key; and
generating text (510), via a processor (502) operating in a mixed text entry mode, wherein generating text comprises generating one of the first set of characters as part of the text in response to a first text entry that includes detecting the set of selections of the input member and determining, based on the set of detectable characteristics, that the first text entry is in the first text entry mode, and generating text further comprises generating one of the second set of characters as part of the text in response to a second text entry that includes detecting the set of selections of the input member and determining, based on the set of characteristics, that the second text entry is in the second text entry mode.

**9.** The method of claim 8, wherein the set of detectable characteristics includes a physical characteristic.

**10.** The method of claim 9, wherein the physical characteristic includes an amount of pressure applied to the input member or a duration of selection of the input member.

**11.** The method of claims 8-10, wherein a plurality of characters are associated with the input member, and wherein the first text entry mode is a multi-tap mode and the second text entry mode is a predictive mode, such that a specific number of selections of the input member in the multi-tap mode corresponds to a specific character of the plurality of characters and one selection of the input member in the predictive mode corresponds to each of the plurality of characters, and wherein, in response to detecting one selection of the input member in the predictive mode, the processor generates a set of candidate texts (208), each of the set of candidate texts includes one of the plurality of characters at a location corresponding to the one selection.

**12.** The method of claim 11, wherein the device comprises a plurality of input members, and wherein upon detecting a plurality of selections of the plurality of input members, the processor generates the set of candidate texts (208), each candidate text of the set of candidate texts including a plurality of characters corresponding to the plurality of selections.

**13.** The method of claims 8-10, wherein the text includes a plurality of characters, the method further comprising:
associating the plurality of characters with a plurality of selections of a plurality of input members of the device, wherein the plurality of selections includes a first subset of selection sets in the first text entry mode and a second subset of selection sets in the second text entry mode, to each selection set in the first subset of selection sets being associated with one character of a first subset of characters in the plurality of characters and to each selection set in the second subset of selection sets being associated with one character of a second subset of characters in the plurality of characters; and
generating, via the processor operating in the mixed text entry mode, the plurality of characters in response to detecting the plurality of selections irrespective of the order of the first and the second subset of characters and irrespective of whether the first or the second subset of characters are located contiguously in the plurality of characters.

**14.** The method of claims 8-10, further including switching to a single-mode state upon receiving a single mode input, wherein in the single-mode state the processor detects the set of selections of the input member only in one of the first text entry mode or the second text entry.

**15.** The method of claim 12, further comprising selecting, via a selection member, one of the set of candidate texts as an input text.
